# EUROPEAN PATENT APPLICATION

(11) **EP 4 786 329 A1**
(43) Date of publication of application: **05.08.2026**
(21) Application number: 26155159.2
(22) Date of filing: 29.01.2026
(51) Int. Cl.: B64C 11/02, B64D 27/02, B64D 27/33, B64D 27/40, B64D 29/02

(54) **AIRCRAFT PROPULSION SYSTEM WITH MODULAR OPEN PROPULSOR ROTOR ASSEMBLY**

(30) Priority: 29.01.2025 US 202519039976
(71) Applicant: RTX Corporation, Farmington, CT 06032 (US)
(72) Inventor: MORTON, Jeffrey T., Manchester, 06040 (US); XU, JinQuan, East Greenwich, 02818 (US); BREAULT, Andrew E., Bolton, 06043 (US)
(74) Representative: Dehns

(57) **Abstract**

An assembly for an aircraft propulsion system (20) includes a first open propulsor rotor (40), a turbine engine (32), a pylon structure (210), a support structure (112), a second open propulsor rotor (42) and a drive system. The turbine engine (32) includes a flowpath, a compressor section (71), a combustor section (72), a turbine section (73) and a rotating structure (94). The rotating structure includes a turbine rotor (84) in the turbine section (73). The rotating structure is configured to drive rotation of the first open propulsor rotor (40). The pylon structure (210) is mounted to the turbine engine (32). The support structure (112) is arranged with the pylon structure (210) independent of the turbine engine (32). The second open propulsor rotor (42) is rotationally supported by the support structure (112). The drive system is configured to drive rotation of the second open propulsor rotor (42).

## Description

### BACKGROUND

### 1. Technical Field

This invention relates generally to an aircraft and, more particularly, to an open rotor propulsion system for the aircraft.

### 2. Background Information

Various types and configurations of aircraft propulsion systems are known in the art including those with one or more open propulsor rotors. While these known aircraft propulsion systems have various benefits, there is still room in the art for improvement.

### SUMMARY

According to an aspect of the present invention, an assembly is provided for an aircraft propulsion system. This assembly includes a first open propulsor rotor, a turbine engine, a pylon structure, a support structure, a second open propulsor rotor and a drive system. The turbine engine includes a flowpath, a compressor section, a combustor section, a turbine section and a rotating structure (e.g., a shaft). The flowpath extends longitudinally though the compressor section, the combustor section and the turbine section from an airflow inlet into the flowpath to a combustion products exhaust from the flowpath. The rotating structure includes a turbine rotor in the turbine section. The rotating structure is configured to drive rotation of the first open propulsor rotor. The pylon structure is mounted to the turbine engine. The support structure is arranged with the pylon structure independent of the turbine engine. The second open propulsor rotor is rotationally supported by the support structure. The drive system is configured to drive rotation of the second open propulsor rotor.

According to another aspect of the present invention, an assembly is provided for an aircraft with an airframe and a propulsion system. This assembly includes a pylon structure, a support structure and an open propulsor rotor (e.g., the second open propulsor rotor according to the first aspect). The pylon structure is configured to mount the propulsion system to a member of the airframe. The support structure is mounted to or formed integral with the pylon structure. The support structure includes a track and a bore. The track extends circumferentially about an axis. The bore extends axially through the support structure and is configured as a receptacle for a turbine engine of the propulsion system. The open propulsor rotor is disposed radially outboard (outside) of and circumscribes the support structure. The open propulsor rotor includes a rotor base and a plurality of open propulsor blades. The rotor base is configured with the track such that the open propulsor rotor is operable to move relative to the support structure and rotate about the axis. The open propulsor blades are arranged circumferentially about the axis in an array. Each of the open propulsor blades projects radially out from the rotor base into an external environment.

According to another aspect of the present invention, an assembly is provided for an aircraft propulsion system. This assembly includes a support structure, an open propulsor rotor (e.g., the second open propulsor rotor according to the first aspect) and one or more bearings. The support structure includes a channel and a bore. The channel extends circumferentially around an axis within the support structure. The channel projects radially inward into the support structure towards the axis to a channel endwall. The channel extends axially along the axis within the support structure between a first channel sidewall and a second channel sidewall. The bore extends axially along the axis through the support structure and is configured to receive a turbine engine for the aircraft propulsion system. The open propulsor rotor includes a rotor base and a plurality of open propulsor blades. The rotor base is disposed in the channel and circumscribes the support structure. The open propulsor blades are arranged circumferentially about the axis in an array. Each of the open propulsor blades projects radially out from the rotor base into an external environment to a respective blade tip. The one or more bearings moveably couple the rotor base to the support structure such that the open propulsor rotor is configured to move relative to the support structure and rotate around the axis.

According to another aspect of the present invention, an assembly is provided for an aircraft propulsion system. This assembly includes a first propulsor rotor, a turbine engine and a support structure for a second propulsor rotor. The turbine engine includes a flowpath, a compressor section, a combustor section, a turbine section and a rotating structure. The flowpath extends longitudinally though the compressor section, the combustor section and the turbine section from an airflow inlet into the flowpath to a combustion products exhaust from the flowpath. The rotating structure includes a turbine rotor in the turbine section. The rotating structure is configured to drive rotation of the first propulsor rotor. The support structure includes a channel and a bore configured to receive the turbine engine. The channel extends circumferentially around an axis within the support structure. The channel projects radially inward into the support structure towards the axis to a channel endwall. The channel extends axially along the axis within the support structure between a first channel sidewall and a second channel sidewall. The bore extends axially along the axis through the support structure.

According to still another aspect of the present invention, a method is provided during which an aircraft propulsion system is assembled with an aircraft airframe. The aircraft propulsion system includes a first open propulsor rotor, a turbine engine, a support structure, a second open propulsor rotor and a drive system. The turbine engine includes a flowpath, a compressor section, a combustor section, a turbine section and a rotating structure. The flowpath extends longitudinally though the compressor section, the combustor section and the turbine section from an airflow inlet into the flowpath to a combustion products exhaust from the flowpath. The rotating structure includes a turbine rotor in the turbine section. The rotating structure is configured to drive rotation of the first open propulsor rotor. The support structure is arranged with a pylon structure that attaches the aircraft propulsion system to the aircraft airframe. The second open propulsor rotor is rotationally supported by the support structure. The drive system is configured to drive rotation of the second open propulsor rotor. The assembling of the aircraft propulsion system with the aircraft airframe includes inserting the turbine engine into a bore of the support structure while the support structure is fixed to the pylon structure.

The following optional features may be applied to any of the aspects described above.

In any of the aspects or embodiments described above or herein, the support structure may include a track. The track may extend circumferentially about an axis. The second open propulsor rotor may include a rotor base and a plurality of open propulsor blades. The rotor base may be configured with the track such that the second open propulsor rotor is operable to move relative to the support structure and rotate about the axis.

In any of the aspects or embodiments described above or herein, the first open propulsor rotor may be operatively coupled to the turbine engine prior to inserting the turbine engine into the bore of the support structure.

In any of the aspects or embodiments described above or herein, the support structure may extend axially along the axis between a first side and a second side. The first open propulsor rotor may be disposed axially to the first side of the support structure. The turbine engine may be inserted into the bore of the support structure from the second side of the support structure.

In any of the aspects or embodiments described above or herein, the assembly may also include a pylon structure configured to mount the turbine engine to an aircraft airframe. The support structure may be fixed to the pylon structure.

In any of the aspects or embodiments described above or herein, the rotating structure may be configured to drive the rotation of the first open propulsor rotor during a first mode (a first mode of operation of the aircraft propulsion system) and a second mode (a second mode of operation of the aircraft propulsion system). The drive system may be configured to drive the rotation of the second open propulsor rotor during the first mode. The second open propulsor rotor may be rotationally fixed during the second mode.

In any of the aspects or embodiments described above or herein, the support structure may be mounted to the pylon structure independent of the turbine engine.

In any of the aspects or embodiments described above or herein, the support structure may be formed integral with the pylon structure.

In any of the aspects or embodiments described above or herein, the drive system may be discrete from (e.g., physically and/or operationally independent of) the rotating structure.

In any of the aspects or embodiments described above or herein, the drive system may include a drive unit operably coupled to and configured to drive the rotation of the second open propulsor rotor. The drive unit may be mounted to the support structure and/or the pylon structure.

In any of the aspects or embodiments described above or herein, the drive system may include an electric machine operably coupled to and configured to drive the rotation of the second open propulsor rotor.

In any of the aspects or embodiments described above or herein, the drive system may include an air turbine operably coupled to and configured to drive the rotation of the second open propulsor rotor.

In any of the aspects or embodiments described above or herein, the assembly may also include a housing structure including an engine case, a nacelle structure and a receptacle. The nacelle structure may be disposed radially outboard of and extend along the engine case. The nacelle structure may form a first axial section of an exterior flow boundary for the aircraft propulsion system that borders an environment external to the aircraft propulsion system. The receptacle may be disposed radially outboard of the engine case and axially between the open propulsor rotor (e.g., the second open propulsor rotor) and the nacelle structure. The receptacle may be configured to receive the support structure. The compressor section, the combustor section and the turbine section may be housed within the engine case.

In any of the aspects or embodiments described above or herein, at least the pylon structure, the support structure and the second open propulsor rotor may be configured together in a standalone module that is independent of the turbine engine.

In any of the aspects or embodiments described above or herein, the drive system may also be configured as part of the standalone module.

In any of the aspects or embodiments described above or herein, the assembly may also include a power source operatively independent of the turbine engine. The power source may be configured to power operation of the drive system.

In any of the aspects or embodiments described above or herein, the power source may be an electrical power source.

In any of the aspects or embodiments described above or herein, the power source may be a fluid power source.

In any of the aspects or embodiments described above or herein, the turbine engine may be configured to power operation of the drive system.

In any of the aspects or embodiments described above or herein, the assembly may also include a drive unit configured to drive rotation of the open propulsor rotor (e.g., the second open propulsor rotor) about the axis. The drive unit may be connected to the support structure and operatively coupled to the rotor base.

In any of the aspects or embodiments described above or herein, the assembly may also include a drive unit and a lock. The drive unit may be configured to drive rotation of the open propulsor rotor (e.g., the second open propulsor rotor) about the axis during a first mode (a first mode of operation of the aircraft propulsion system). The lock may be configured to rotationally fix the open propulsor rotor (e.g., the second open propulsor rotor) to the support structure during a second mode (a second mode of operation of the aircraft propulsion system).

In any of the aspects or embodiments described above or herein, the track may include an annular channel in the support structure. The rotor base may be seated within the annular channel.

In any of the aspects or embodiments described above or herein, the assembly may also include a first bearing and/or a second bearing. The first bearing may be radially between and engaged with the rotor base and the support structure. The second bearing may be axially between and engaged with the rotor base and the support structure.

In any of the aspects or embodiments described above or herein, the assembly may also include an actuation system configured to adjust a pitch of one or more of the open propulsor blades.

In any of the aspects or embodiments described above or herein, the open propulsor rotor (e.g., the second open propulsor rotor) may be a downstream open propulsion rotor. The assembly may also include an upstream open propulsor rotor (e.g., the first open propulsor rotor) next to and upstream of the downstream open propulsion rotor (e.g., relative to a direction of travel or a direction of airflow when in use). The turbine engine may be configured to drive rotation of the upstream open propulsor rotor. The turbine engine may extend axially into or through the bore.

In any of the aspects or embodiments described above or herein, the turbine engine may be mounted to the pylon structure independent of the support structure.

In any of the aspects or embodiments described above or herein, the turbine engine may be mounted to the pylon structure through the support structure.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic sectional illustration of an aircraft propulsion system mounted to a portion of an airframe component.
FIG. 2 is a partial schematic sectional illustration of the aircraft propulsion system at a propulsion section.
FIG. 3 is a cross-sectional illustration of the aircraft propulsion system at an aft open propulsor rotor.
FIG. 4 is a sectional illustration of the aircraft propulsion system at the aft open propulsor rotor.
FIG. 5 is a sectional illustration of the aircraft propulsion system at the aft open propulsor rotor at a location with a drive unit.
FIG. 6 is a partial side schematic illustration of the aft open propulsor rotor coupled to an electric machine with an electrical power source.
FIG. 7 is a partial side schematic illustration of the aft open propulsor rotor coupled to an air turbine along an air circuit coupled to one or more air sources.
FIGS. 8-10 are partial schematic sectional illustrations of the aircraft propulsion system with various modular arrangements.
FIG. 11 is a partial schematic sectional illustration of the aircraft propulsion system with a rotor support structure mounted to a pylon structure.
FIG. 12 is a partial schematic sectional illustration of the aircraft propulsion system with the rotor support structure integrated as part of the pylon structure.
FIGS. 13A-C are partial schematic sectional illustrations depicting a sequence for assembling the aircraft propulsion system with the airframe component.
FIG. 14 is a partial schematic sectional illustration depicting part of another sequence for assembling the aircraft propulsion system with the airframe component.
FIG. 15 is a schematic illustration of aircraft propulsion system members controlled by multiple controllers.
FIG. 16 is a partial schematic sectional illustration of the aircraft propulsion system with a bypass flowpath.
FIG. 17 is a sectional illustration at a joint between members of the aircraft propulsion system.

### DETAILED DESCRIPTION

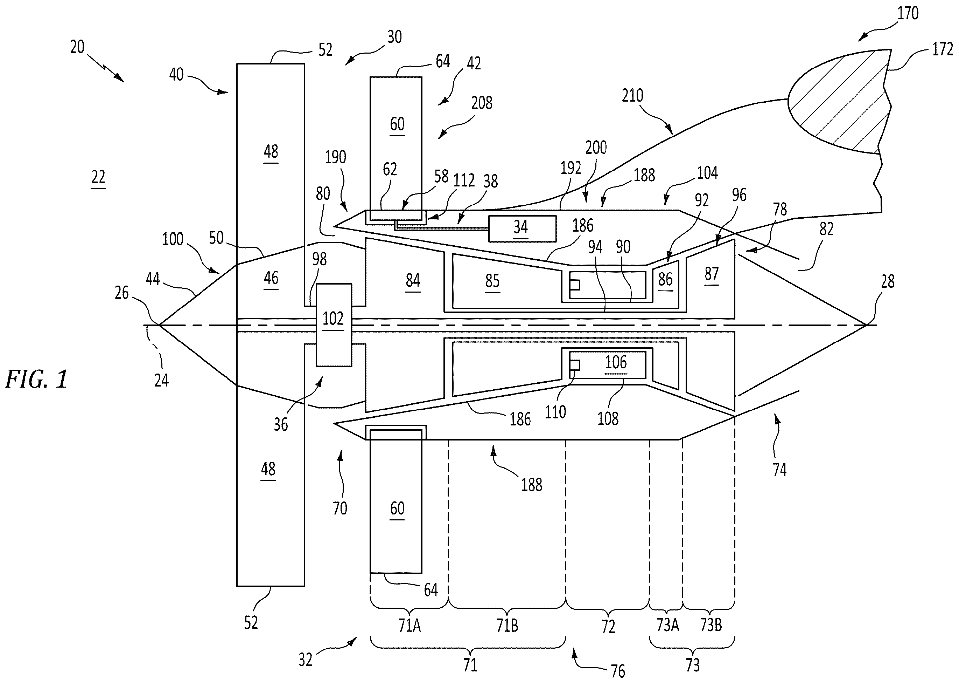

FIG. 1 is a side schematic illustration of a propulsion system 20 for an aircraft. The aircraft may be an airplane, a drone (e.g., an unmanned aerial vehicle (UAV)) or any other manned or unmanned aerial vehicle or system. The aircraft propulsion system 20 of FIG. 1 is configured as an open rotor propulsion system with a swirl recovery blade (SRB) open rotor architecture. With such an open rotor architecture, the aircraft propulsion system 20 may operate as: (A) a counter-rotating open rotor (CROR) propulsion system during a dual rotor mode of operation; and (B) a single open rotor and swirl recovery vane (SRV) propulsion system during a single rotor mode of operation. The aircraft propulsion system 20 of the present disclosure, however, is not limited to operating in such exemplary dual rotor and single rotor modes as described below in further detail. Herein, the term "open" may describe a propulsion system section and/or a propulsion system component which is open to an environment 22 (e.g., an ambient environment) external to the aircraft propulsion system 20 and, more generally, the aircraft.

The aircraft propulsion system 20 extends axially along an axis 24 between an upstream, forward end 26 of the aircraft propulsion system 20 and a downstream, aft end 28 of the aircraft propulsion system 20. The propulsion system axis 24 may be a centerline axis of the aircraft propulsion system 20 and/or a centerline axis of one or more members of the aircraft propulsion system 20. The propulsion system axis 24 may also or alternatively be a rotational axis of one or more members of the aircraft propulsion system 20. The aircraft propulsion system 20 of FIG. 1 includes an open rotor propulsion section 30, a gas turbine engine 32, a rotor drive system 34 and a drivetrain system, where the drivetrain system of FIG. 1 includes a forward rotor drivetrain 36 and an aft rotor drivetrain 38. Briefly, as described below in further detail, the rotor drive system 34 may be powered through operation of the turbine engine 32 or powered independent of the operation of the turbine engine 32.

The propulsion section 30 of FIG. 1 includes an upstream, forward open propulsor rotor 40 and a multi-function downstream, aft open propulsor rotor 42. These open propulsor rotors 40 and 42 are un-ducted components of the aircraft propulsion system 20 and its propulsion section 30. The propulsion section 30 of FIG. 1 also includes a nose cone 44 disposed at (e.g., on, adjacent or proximate) the propulsion system forward end 26. Briefly, this nose cone 44 may be configured as a spinner which is rotatable with the forward open propulsor rotor 40 about the propulsion system axis 24. Alternatively, the nose cone 44 may be configured as a stationary structure of the propulsion section 30.

The forward open propulsor rotor 40 includes a forward rotor base 46 (e.g., a disk or a hub) and a plurality of open forward propulsor blades 48 (e.g., airfoils). The forward propulsor blades 48 are arranged and may be equispaced circumferentially about the forward rotor base 46 and the propulsion system axis 24 in an array; e.g., a circular array. This array of the forward propulsor blades 48 may be unshrouded or alternatively shrouded by a tubular forward propulsor rotor shroud dedicated to the forward open propulsor rotor 40 for example. Each of the forward propulsor blades 48 is connected to (e.g., formed integral with or otherwise attached to) the forward rotor base 46. Each of the forward propulsor blades 48 projects spanwise along a span line of the respective forward propulsor blade 48 (e.g., radially relative to the propulsion system axis 24) out from an exterior surface 50 of the forward rotor base 46, into the external environment 22, to a distal tip 52 of the respective forward propulsor blade 48. Each forward propulsor blade 48 is thereby configured as an un-ducted propulsor blade which is exposed to (e.g., disposed in) the surrounding external environment 22.

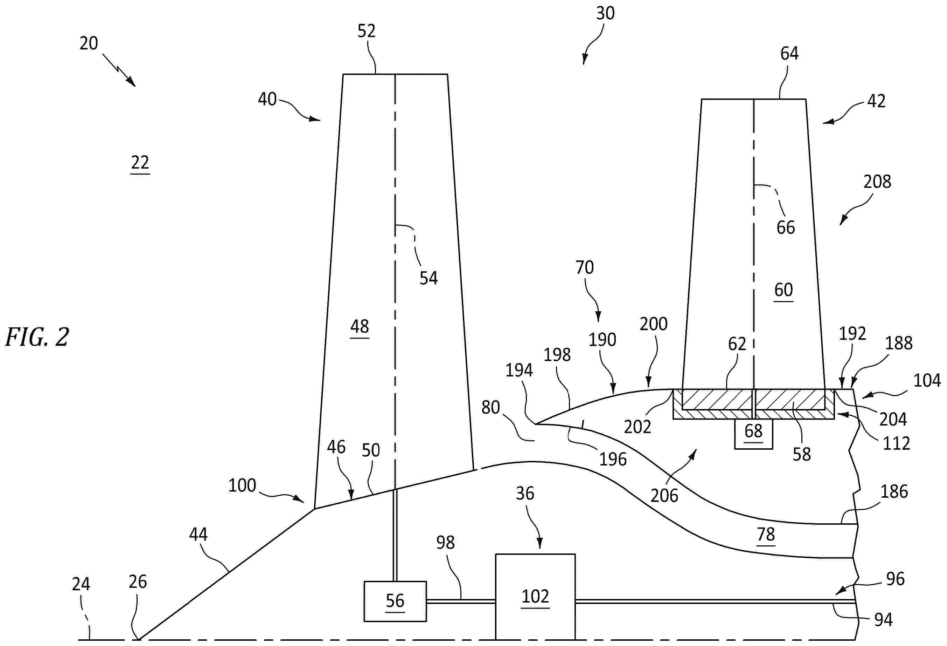

Referring to FIG. 2, each forward propulsor blade 48 may be configured to pivot about a respective forward blade pivot axis 54. This forward blade pivot axis 54 extends radially relative to the propulsion system axis 24. The forward blade pivot axis 54 of FIG. 2, for example, is arranged perpendicular to the propulsion system axis 24 when viewed, for example, in a longitudinal reference plane parallel to (e.g., including) the propulsion system axis 24; e.g., the plane of FIG. 2. Each forward propulsor blade 48 of FIG. 2 is operatively coupled with a forward blade actuation system 56. This forward blade actuation system 56 is configured to pivot each forward propulsor blade 48 about its respective forward blade pivot axis 54. By pivoting each forward propulsor blade 48 about its forward blade pivot axis 54, a pitch of the respective forward propulsor blade 48 may be changed. Note, while the forward blade pivot axis 54 is shown in FIG. 2 as being perpendicular to the propulsion system axis 24, it is contemplated this forward blade pivot axis 54 may or may not be coincident with the propulsion system axis 24. Moreover, it is contemplated each forward blade pivot axis 54 may alternatively be angularly offset from the propulsion system axis 24 by an acute angle or an obtuse angle when viewed, for example, in the longitudinal reference plane. Of course, it is contemplated some or all of the forward propulsor blades 48 may be alternatively moved to change the forward propulsor blade pitch and/or another forward propulsor blade parameter such as blade camber. Moreover, it is contemplated some or all of the forward propulsor blades 48 may alternatively be fixed position forward propulsor blades in other embodiments.

Referring to FIG. 1, the aft open propulsor rotor 42 includes an aft rotor base 58 (e.g., a disk or a hub) and a plurality of open aft propulsor blades 60 (e.g., airfoils). This aft open propulsor rotor 42 and its aft propulsor blades 60 are arranged axially next to (e.g., adjacent) the forward open propulsor rotor 40 and its forward propulsor blades 48 within the external environment 22. The aft open propulsor rotor 42 and its aft propulsor blades 60 of FIG. 1, for example, are arranged downstream and aft of the forward open propulsor rotor 40 and its forward propulsor blades 48, without (e.g., any) other propulsor rotors or guide vane structures axially therebetween to further propel and/or turn the air propelled by the forward open propulsor rotor 40 within the external environment 22 in an axial downstream, aft direction (e.g., left-to-right in FIGS. 1 and 2) towards the aft open propulsor rotor 42. In addition, the aft open propulsor rotor 42 and its aft rotor base 58 may extend axially along and circumscribe the turbine engine 32. By contrast, the forward open propulsor rotor 40 and its forward rotor base 46 of FIG. 1 are disposed axially between the propulsion system forward end 26 and the turbine engine 32.

The aft propulsor blades 60 are arranged and may be equispaced circumferentially about the aft rotor base 58 and the propulsion system axis 24 in an array; e.g., a circular array. This array of the aft propulsor blades 60 may be unshrouded or alternatively shrouded by a tubular aft propulsor rotor shroud dedicated to the aft open propulsor rotor 42 for example. Each of the aft propulsor blades 60 is connected to (e.g., formed integral with or otherwise attached to) the aft rotor base 58. Each of the aft propulsor blades 60 projects spanwise along a span line of the respective aft propulsor blade 60 (e.g., radially relative to the propulsion system axis 24) out from an exterior surface 62 of the aft rotor base 58, into the external environment 22, to a distal tip 64 of the respective aft propulsor blade 60. Each aft propulsor blade 60 is thereby configured as an un-ducted propulsor blade which is exposed to (e.g., disposed in) the surrounding external environment 22.

Referring to FIG. 2, each aft propulsor blade 60 may be configured to pivot about a respective aft blade pivot axis 66. This aft blade pivot axis 66 extends radially relative to the propulsion system axis 24. The aft blade pivot axis 66 of FIG. 2, for example, is arranged perpendicular to the propulsion system axis 24 when viewed, for example, in the longitudinal reference plane. Each aft propulsor blade 60 of FIG. 2 is operatively coupled with an aft blade actuation system 68. This aft blade actuation system 68 may be discrete from or integrated as part of the forward blade actuation system 56. The aft blade actuation system 68 is configured to pivot each aft propulsor blade 60 about its respective aft blade pivot axis 66. By pivoting each aft propulsor blade 60 about its aft blade pivot axis 66, a pitch of the respective aft propulsor blade 60 may be changed. Note, while the aft blade pivot axis 66 is shown in FIG. 2 as being perpendicular to the propulsion system axis 24, it is contemplated this aft blade pivot axis 66 may or may not be coincident with the propulsion system axis 24. Moreover, it is contemplated each aft blade pivot axis 66 may alternatively be angularly offset from the propulsion system axis 24 by an acute angle or an obtuse angle when viewed, for example, in the longitudinal reference plane. Of course, it is contemplated some or all of the aft propulsor blades 60 may be alternatively moved to change the aft propulsor blade pitch and/or another aft propulsor blade parameter such as blade camber. Moreover, it is contemplated some or all of the aft propulsor blades 60 may alternatively be fixed position aft propulsor blades in other embodiments.

Referring to FIG. 1, the turbine engine 32 includes an inlet section 70, a compressor section 71, a combustor section 72, a turbine section 73 and an exhaust section 74. The compressor section 71 of FIG. 1 includes a low pressure compressor (LPC) section 71A and a high pressure compressor (HPC) section 71B. The turbine section 73 of FIG. 1 includes a high pressure turbine (HPT) section 73A and a low pressure turbine (LPT) section 73B. At least (or only) the LPC section 71A, the HPC section 71B, the combustor section 72, the HPT section 73A and the LPT section 73B collectively form a core 76 of the turbine engine 32; e.g., a gas generator. The aircraft propulsion system 20 of FIG. 1 and its turbine engine 32 also include an engine flowpath 78 (e.g., annular core flowpath) that extends longitudinally through the engine core 76 from an airflow inlet 80 into the engine flowpath 78 to a combustion products exhaust 82 from the engine flowpath 78. Here, the flowpath inlet 80 is also an airflow inlet into the aircraft propulsion system 20 of FIG. 1 and its turbine engine 32. The flowpath exhaust 82 is also a combustion products exhaust from the aircraft propulsion system 20 of FIG. 1 and its turbine engine 32.

The LPC section 71A includes a bladed low pressure compressor (LPC) rotor 84. The HPC section 71B includes a bladed high pressure compressor (HPC) rotor 85. The HPT section 73A includes a bladed high pressure turbine (HPT) rotor 86. The LPT section 73B includes a bladed low pressure turbine (LPT) rotor 87. Each of these bladed engine rotors 84-87 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 78. Each of the rotor blades is connected to the respective rotor base. Each of the rotor blades projects radially (e.g., spanwise) out from the respective rotor base into the engine flowpath 78 and to a distal tip of the respective rotor blade.

The HPC rotor 85 is coupled to and rotatable with the HPT rotor 86. The HPC rotor 85 of FIG. 1, for example, is connected to the HPT rotor 86 by a high speed shaft 90. At least (or only) the HPC rotor 85, the HPT rotor 86 and the high speed shaft 90 collectively form a high speed rotating structure 92; e.g., a high speed spool of the turbine engine 32 and its engine core 76. This high speed rotating structure 92 of FIG. 1 and its members 85, 86 and 90 are rotatable about the propulsion system axis 24. However, in other embodiments, the high speed rotating structure 92 and its members 85, 86 and 90 may alternatively be rotatable about another rotational axis which is (e.g., laterally and/or angularly) offset from a rotational axis of the forward open propulsor rotor 40 and/or a rotational axis of the aft open propulsor rotor 42.

The LPC rotor 84 is coupled to and rotatable with the LPT rotor 87. The LPC rotor 84 of FIG. 1, for example, is connected to the LPT rotor 87 by a low speed shaft 94. At least (or only) the LPC rotor 84, the LPT rotor 87 and the low speed shaft 94 collectively form a low speed rotating structure 96; e.g., a low speed spool of the turbine engine 32 and its engine core 76. This low speed rotating structure 96 of FIG. 1 and its members 84, 87 and 94 are rotatable about the propulsion system axis 24. However, in other embodiments, the low speed rotating structure 96 and its members 84, 87 and 94 may alternatively be rotatable about another rotational axis which is (e.g., laterally and/or angularly) offset from the rotational axis of the forward open propulsor rotor 40 and/or the rotational axis of the aft open propulsor rotor 42.

The forward open propulsor rotor 40 is connected to and rotatable with a forward propulsor shaft 98. At least (or only) the forward open propulsor rotor 40 and the forward propulsor shaft 98 collectively form a forward propulsor rotating structure 100. This forward propulsor rotating structure 100 of FIG. 1 and its members 40 and 98 are rotatable about the propulsion system axis 24. The forward propulsor rotating structure 100 of FIG. 1 is coupled to the low speed rotating structure 96 through the forward drivetrain system 36. This forward rotor drivetrain 36 may be configured as a geared drivetrain, where a geartrain 102 (e.g., a transmission, a speed change device, an epicyclic geartrain, etc.) is disposed between and operatively couples the forward propulsor rotating structure 100 and its forward propulsor shaft 98 to the low speed rotating structure 96 and its low speed shaft 94. With this arrangement, the forward propulsor rotating structure 100 and its forward open propulsor rotor 40 may rotate at a different (e.g., slower) rotational speed than the low speed rotating structure 96 and its LPT rotor 87. However, the forward rotor drivetrain 36 may alternatively be configured as a direct drive drivetrain, where the geartrain 102 is omitted. With this arrangement, (a) the forward propulsor rotating structure 100 and its forward open propulsor rotor 40 and (b) the low speed rotating structure 96 and its LPT rotor 87 may rotate at a common (the same) rotational speed.

The aft open propulsor rotor 42 is coupled to the rotor drive system 34 through the aft rotor drivetrain 38. Various rotor drive system arrangements and various aft rotor drivetrain arrangements are described below in further detail.

During operation of the aircraft propulsion system 20 of FIG. 1, ambient air within the external environment 22 is propelled by the rotating forward open propulsor rotor 40 in the downstream, aft direction towards the propulsion system aft end 28. A major portion (e.g., more than 50%) of this air bypasses the turbine engine 32 to provide forward thrust while a minor portion (e.g., less than 50%) of the air flows into the turbine engine 32. For example, an outer stream of the air propelled by the forward open propulsor rotor 40 flows axially across the aft open propulsor rotor 42 and outside of a housing structure 104 for the aircraft propulsion system 20; e.g., along an exterior of the housing structure 104. During the dual rotor mode, the aft open propulsor rotor 42 rotates and further propels and conditions (e.g., straightens out) the outer stream of air within the external environment 22 to enhance (e.g., remove or reduce circumferential swirl) and boost the forward thrust. In general, during this dual rotor mode, the forward open propulsor rotor 40 rotates in a first rotational direction (e.g., clockwise or counterclockwise) about the propulsion system axis 24, and the aft open propulsor rotor 42 rotates in a second rotational direction (e.g., counterclockwise or clockwise) about the propulsion system axis 24 that is rotationally opposite the first rotational direction. During the single rotor mode, the aft open propulsor rotor 42 is stationary and conditions (e.g., straightens) the outer stream of air within the external environment 22 to enhance the forward thrust. The aft open propulsor rotor 42 may thereby function as a stationary guide vane structure for the forward open propulsor rotor 40. By contrast, an inner stream of the air propelled by the rotating forward open propulsor rotor 40 may bypass the aft open propulsor rotor 42 of FIG. 1 and enter the turbine engine 32 and its engine flowpath 78 through the flowpath inlet 80. The air entering the engine flowpath 78 through the flowpath inlet 80 may be referred to as "core air".

The core air is compressed by the LPC rotor 84 and the HPC rotor 85 and directed into a combustion chamber 106 (e.g., an annular combustion chamber) of a combustor 108 (e.g., an annular combustor) in the combustor section 72. Fuel is injected into the combustion chamber 106 by one or more fuel injectors 110 and mixed with the compressed core air to provide a fuel-air mixture. This fuel-air mixture is ignited and combustion products thereof flow through and sequentially drive rotation of the HPT rotor 86 and the LPT rotor 87. The rotation of the HPT rotor 86 and the LPT rotor 87 respectively drive rotation of the HPC rotor 85 and the LPC rotor 84 and, thus, compression of the core air. The rotation of the LPT rotor 87 also drives the rotation of the forward open propulsor rotor 40 through the forward rotor drivetrain 36 and its geartrain 102. The turbine engine 32 and its low speed rotating structure 96 thereby power operation of (e.g., drive rotation of) at least the forward open propulsor rotor 40 during aircraft propulsion system operation. Concurrently, during the dual rotor mode, the rotor drive system 34 drives the rotation of the aft open propulsor rotor 42 through the aft rotor drivetrain 38.

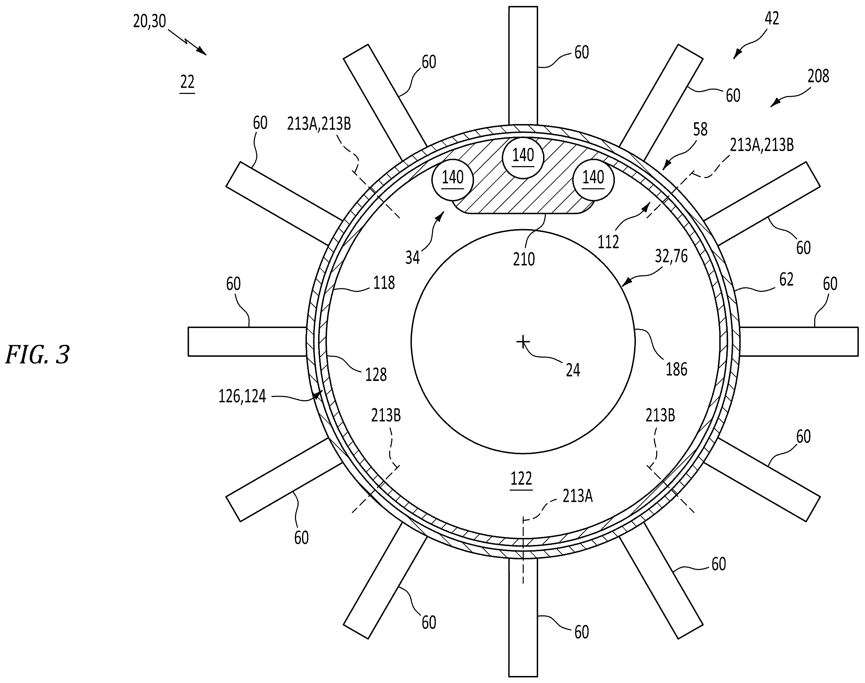

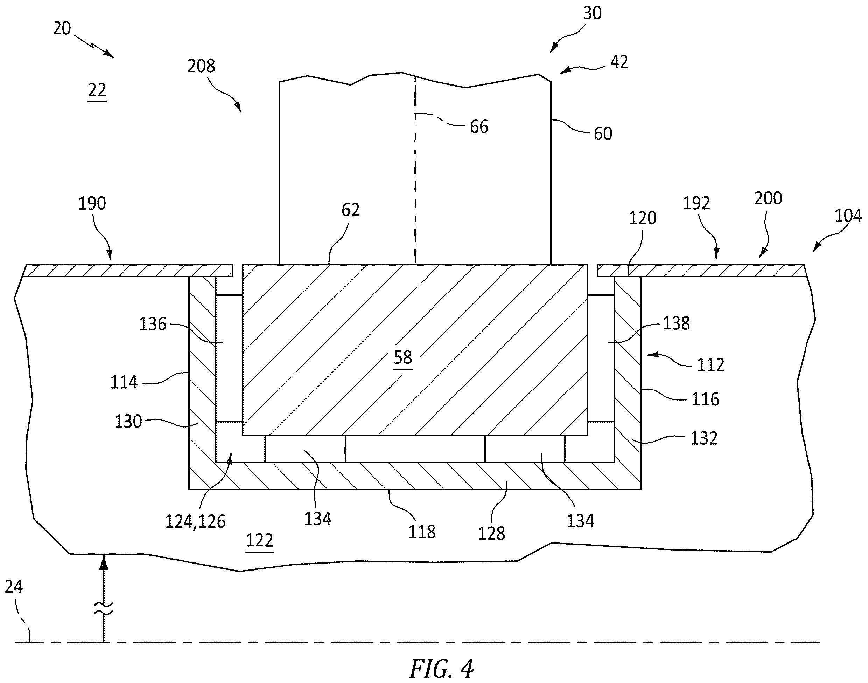

Referring to FIG. 3, the aft open propulsor rotor 42 is supported within the aircraft propulsion system 20 by a rotor support structure 112; e.g., a stationary support ring. The rotor support structure 112 of FIG. 3 is spaced radially outboard of and may be structurally independent of the turbine engine 32. The rotor support structure 112 extends circumferentially around the propulsion system axis 24 providing the rotor support structure 112 of FIG. 3 with a full-hoop (e.g., annular) body, which full-hoop body may be an unsegmented or segmented full-hoop body as discussed below in further detail. The rotor support structure 112 thereby circumscribes the turbine engine 32 of FIG. 3. Referring to FIG. 4, the rotor support structure 112 extends axially along the propulsion system axis 24 and the turbine engine 32 (see FIG. 1) from an axial upstream, forward end 114 of the rotor support structure 112 to an axial downstream, aft end 116 of the rotor support structure 112. The rotor support structure 112 extends radially from a radial inner side 118 of the rotor support structure 112 to a radial outer side 120 of the rotor support structure 112. The support structure inner side 118 forms a radial outer peripheral boundary of a center bore 122 of the rotor support structure 112. The support structure bore 122 extends axially along the propulsion system axis 24 through the rotor support structure 112 between the support structure ends 114 and 116. Referring to FIG. 3, the support structure bore 122 may be configured as a receptacle which receives the turbine engine 32 during aircraft propulsion system assembly as described below in further detail.

The rotor support structure 112 of FIG. 4 is configured with a propulsor rotor track 124 for the aft open propulsor rotor 42. This propulsor rotor track 124 extends circumferentially around the propulsion system axis 24. The propulsor rotor track 124 is configured to support and guide the rotation of the aft open propulsor rotor 42 about its rotational axis; e.g., the propulsion system axis 24 of FIG. 4. The propulsor rotor track 124 FIG. 4, for example, is configured as or otherwise includes a track channel 126 in the rotor support structure 112.

The track channel 126 projects radially inward (in a radial direction towards the propulsion system axis 24) into the rotor support structure 112 from the support structure outer side 120 to an inner channel endwall 128. This channel endwall 128 may be formed by a section of the rotor support structure 112 at (or about) the support structure inner side 118. The track channel 126 of FIG. 4 extends axially along the propulsion system axis 24 within the rotor support structure 112 from an axial upstream, forward channel sidewall 130 to an axial downstream, aft channel sidewall 132. The forward channel sidewall 130 may be formed by a section of the rotor support structure 112 at (or about) the support structure forward end 114. The aft channel sidewall 132 may be formed by a section of the rotor support structure 112 at (or about) the support structure aft end 116. The track channel 126 extends circumferentially around the propulsion system axis 24 within the rotor support structure 112. The track channel 126 is thereby provided with a full-hoop (e.g., annular) geometry, which full-hoop body may be an unsegmented or segmented full-hoop body.

The aft rotor base 58 of FIG. 4 is received and seated within the track channel 126. Within the track channel 126, one or more inner bearings 134 may be arranged radially between the rotor support structure 112 and its channel endwall 128 and a radial inner side of the aft rotor base 58. Each of these inner bearings 134 radially engages the channel endwall 128 and the aft rotor base 58. Examples of the inner bearings 134 include, but are not limited to, journal bearings and rolling element bearings. An upstream, forward bearing 136 may be arranged axially between the rotor support structure 112 and its forward channel sidewall 130 and an axial upstream, forward end of the aft rotor base 58. This forward bearing 136 axially engages the forward channel sidewall 130 and the aft rotor base 58. Similarly, a downstream, aft bearing 138 may be arranged axially between the rotor support structure 112 and its aft channel sidewall 132 and an axial downstream, aft end of the aft rotor base 58. This aft bearing 138 axially engages the aft channel sidewall 132 and the aft rotor base 58. Examples of the bearings 136 and 138 include, but are not limited to, thrust bearings. With this arrangement, the bearings 136, 138 rotationally couple the aft open propulsor rotor 42 and its aft rotor base 58 to the rotor support structure 112 such that the aft open propulsor rotor 42 and its aft rotor base 58 may move circumferentially relative to the rotor support structure 112 and thereby rotate about the propulsion system axis 24 of FIGS. 3 and 4. The present invention, however, is not limited to such an exemplary bearing arrangement nor to such an exemplary propulsor rotor track arrangement.

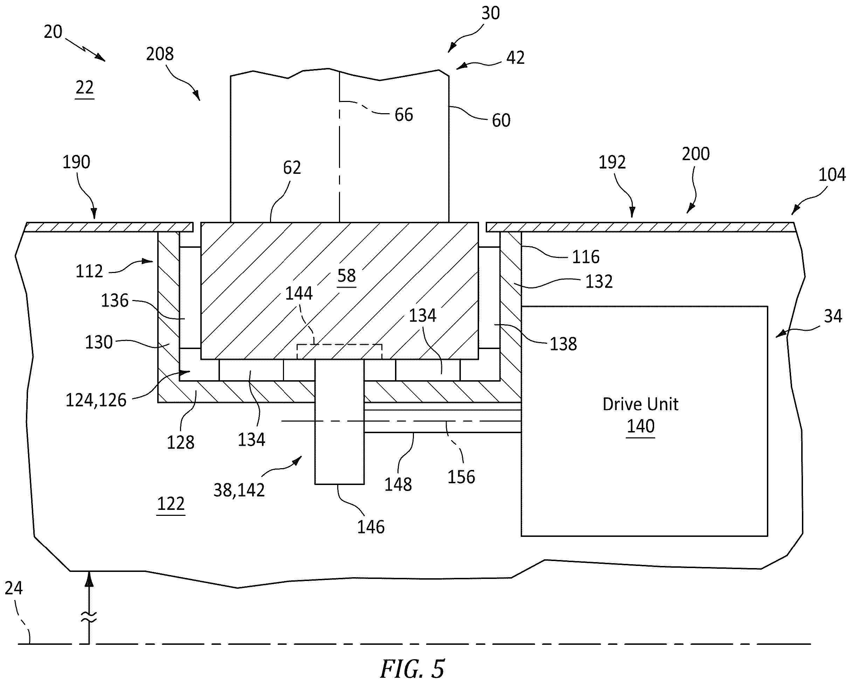

Referring to FIG. 3, the rotor drive system 34 includes one or more drive units 140. Each of these drive units 140 may be mounted to and may be (e.g., completely) structurally supported by the rotor support structure 112. For example, referring to FIG. 5, each drive unit 140 may be mechanically fastened to or otherwise attached to the rotor support structure 112 at (or about) its support structure aft end 116. Each drive unit 140 is operably coupled to the aft open propulsor rotor 42 and its aft rotor base 58 through the aft rotor drivetrain 38. The aft rotor drivetrain 38 of FIG. 5, for example, includes a gear system 142 operatively coupling the drive unit 140 of FIG. 5 to the aft rotor base 58. This gear system 142 includes a ring gear 144 and a drive gear 146 meshed with the ring gear 144. The ring gear 144 of FIG. 5 is connected to (e.g., formed integral with or attached to) and rotatable with the aft rotor base 58. The drive gear 146 of FIG. 5 connected to and rotatable with a shaft 148 of the drive unit 140. The present invention, however, is not limited to such an exemplary aft rotor drivetrain. Moreover, while the rotor drive system 34 and its one or more drive units 140 of FIGS. 3 and 5 are located with the rotor support structure 112, it is contemplated the rotor drive system 34 and its one or more drive units 140 may alternatively be spaced from (e.g., located remote from) the rotor support structure 112. In such embodiments, the rotor drive system 34 and its one or more drive units 140 may or may not be structurally supported by the rotor support structure 112.

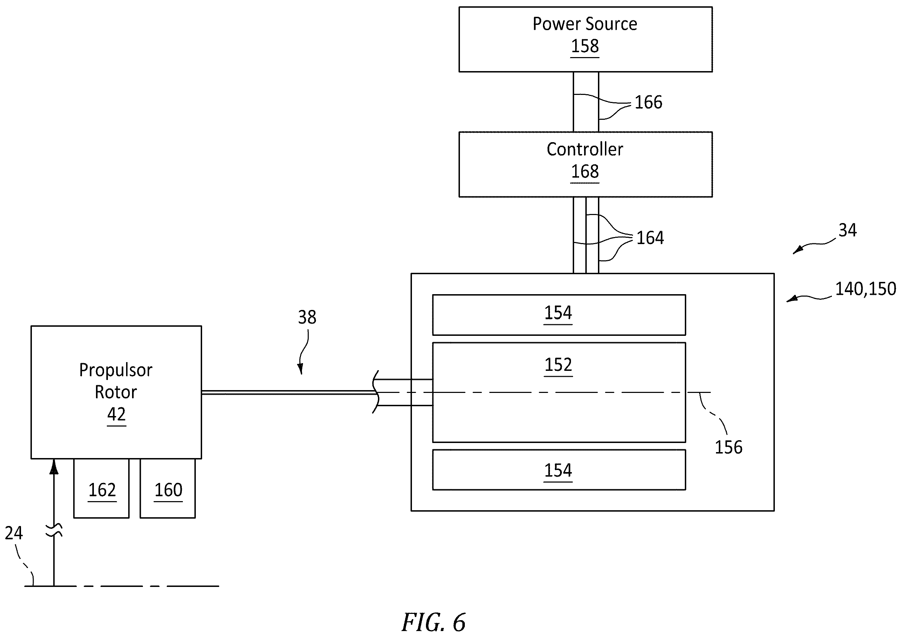

In some embodiments, referring to FIG. 6, each drive unit 140 may be configured as or otherwise include an electric machine 150. The electric machine 150 of FIG. 6 includes an electric machine rotor 152 and an electric machine stator 154. The machine rotor 152 is rotatable about a rotational axis 156 of that drive unit 140 (e.g., the electric machine 150 of FIG. 6), which rotational axis 156 is laterally offset from and may be parallel with the propulsion system axis 24. The machine rotor 152 is operatively coupled to the aft open propulsor rotor 42 through, for example, the aft rotor drivetrain 38. The machine rotor 152 of FIG. 6 is radially inboard of and circumscribed by the machine stator 154. With this arrangement, the electric machine 150 is configured as a radial flux electric machine. The electric machine 150 of the present invention, however, is not limited to such an exemplary rotor-stator configuration nor to radial flux arrangements. The machine stator 154, for example, may alternatively be radially inboard of and may be circumscribed by the machine rotor 152. In another example, the machine rotor 152 may be axially next to the machine stator 154 configuring the electric machine 150 as an axial flux electric machine.

The electric machine 150 of FIG. 6 may be configurable as an electric motor, an electromagnetic brake and/or an electric generator. The electric machine 150 may operate as the electric motor during the dual rotor mode. The electric machine 150 may operate as the electromagnetic brake during the single rotor mode, or during a transition from the dual rotor mode to the single rotor mode, etc. The electric machine 150 may operate as the electric generator during a third power generation mode of operation. Of course, in other embodiments, the electric machine 150 may alternatively be configured as a dedicated electric motor; e.g., without the electromagnetic brake functionality and without electric generator functionality.

During a motor mode of operation, the electric machine 150 may operate as the electric motor to convert electricity received from an electrical power source 158 into mechanical power. The machine stator 154, for example, may generate an electromagnetic field with the machine rotor 152 using the electricity. This electromagnetic field may drive rotation of the machine rotor 152. The machine rotor 152 may thereby drive rotation of the aft open propulsor rotor 42 through the aft rotor drivetrain 38.

During a brake mode of operation, the electric machine 150 may be operated as the electromagnetic brake to brake rotation of the aft open propulsor rotor 42 and/or rotationally fix the aft open propulsor rotor 42. The electric machine 150, for example, may be generally operated as the electric motor. However, whereas the electricity is provided to the machine stator 154 during the motor mode to drive rotation of the machine rotor 152 about the rotational axis 156, the electricity provided to the machine stator 154 is modulated during this brake mode to slow rotation of the machine rotor 152 about the rotational axis 156 and/or stop rotation of the machine rotor 152 about the rotational axis 156. Of course, a mechanical brake 160 may also or alternatively be included to brake rotation of the aft open propulsor rotor 42 and/or fix rotation of the aft open propulsor rotor 42 about the propulsion system axis 24. This mechanical brake 160 may be coupled directly to the aft open propulsor rotor 42. Alternatively, the mechanical brake 160 may be coupled indirectly to the aft open propulsor rotor 42 through, for example, the aft rotor drivetrain 38 or otherwise. Examples of the mechanical brake 160 include, but are not limited to, a disk brake and a drum brake. Moreover, a lock 162 (e.g., a locking mechanism) may also or alternatively be included to hold the aft open propulsor rotor 42 stationary and in place during, for example, the single rotor mode. The lock 162 may thereby rotationally fix the aft open propulsor rotor 42 to the rotor support structure 112 (see FIGS. 3 and 4).

During a generator mode of operation, the electric machine 150 may operate as the electric generator to convert mechanical power received from windmilling rotation of the aft open propulsor rotor 42 into electricity. The windmilling aft open propulsor rotor 42, for example, may drive rotation of the machine rotor 152 through the aft rotor drivetrain 38. The rotation of the machine rotor 152 may generate an electromagnetic field with the machine stator 154, and the machine stator 154 may convert energy from the electromagnetic field into electricity. The electric machine 150 may then provide this electricity to the power source 158 for further use and/or storage. This generator mode may also be used to reduce or modulate propulsion system thrust output while, for example, operating the turbine engine 32 (see FIG. 1) at an optimized thrust setting. In this generator mode, the forward open propulsor rotor 40 may (or may not) be rotationally driven by the low speed rotating structure 96 (see FIG. 1) as described above.

The power source 158 may be electrically coupled with the electric machine 150 through electrical circuitry. This electrical circuitry may include one or more electrical cables 164 and 166 (e.g., high voltage lines) and an electrical machine (EM) controller 168 (e.g., a motor controller). The EM controller 168 is configured to control (e.g., regulate) an electrical current transferred between the electric machine 150 and the power source 158. The power source 158 may be configured to store electricity. The power source 158 may also be configured to provide electricity to the electric machine 150 and/or receive electricity from the electric machine 150. The power source 158, for example, may be configured as or otherwise include one or more electricity storage devices; e.g., batteries, supercapacitors, etc. The power source 158 may also or alternatively be configured as or otherwise include an electric generator. In some embodiments, the power source 158 may be arranged with the aircraft propulsion system 20. In such embodiments, where the power source 158 is or includes the electric generator, this electric generator may be operationally powered by mechanical power generated by the turbine engine 32. In other embodiments, the power source 158 may be arranged remote from the aircraft propulsion system 20. The power source 158, for example, may be arranged with a component of an aircraft airframe 170 (see FIG. 1) such as, but not limited to, an aircraft wing 172 (see FIG. 1) or an aircraft fuselage. In such embodiments, the power source 158 may be operationally independent of the turbine engine 32. For example, the power source 158 may be configured as or receive power from another engine system; e.g., a companion propulsion system, an auxiliary power unit (APU) system, etc.

In some embodiments, during the dual rotor mode, the electric machine 150 may be controlled to vary the ratio between the rotational speed of the forward open propulsor rotor 40 (see FIGS. 1 and 2) and the rotational speed of the aft open propulsor rotor 42 to tailor propulsion section operation to one or more propulsion system operational parameters, one or more aircraft operational parameters and/or one or more environmental conditions.

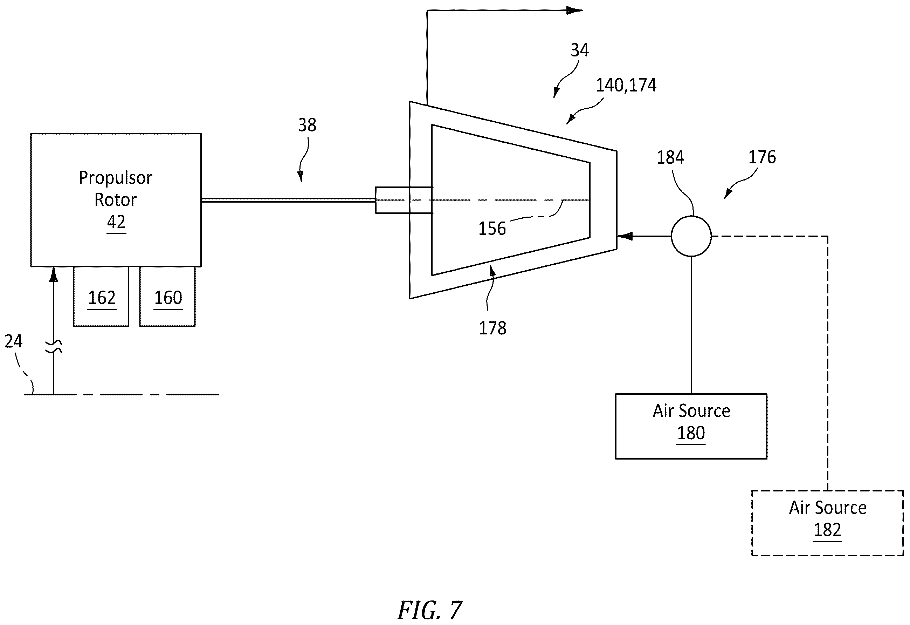

In some embodiments, referring to FIG. 7, each drive unit 140 may be configured as or otherwise include an air turbine 174 fluidly coupled along an air circuit 176. The air turbine 174 includes an air turbine rotor 178 operationally coupled to the aft open propulsor rotor 42 through the aft rotor drivetrain 38. The air circuit 176 is configured to direct compressed air from an air source 180 to the air turbine 174. Within the air turbine 174, the air is expanded across the air turbine rotor 178 to drive rotation of the air turbine rotor 178 and thereby the aft open propulsor rotor 42 through the aft rotor drivetrain 38. In some embodiments, the air source 180 may be a bleed along the engine flowpath 78 (see FIG. 1). This bleed may be disposed along the compressor section 71 of FIG. 1 and, more particularly, along the LPC section 71A of FIG. 1 or the HPC section 71B of FIG. 1. The present invention, however, is not limited to such exemplary bleed locations along the engine flowpath 78. In other embodiments, the air source 180 may be an air system for the aircraft; e.g., an environmental control system (ECS) for the aircraft, an anti-icing system for the aircraft airframe 170, etc. Moreover, while the compressed air within the air system may be originally received from (e.g., compressed within) the turbine engine 32, it is contemplated this air may alternatively be compressed by a compressor (e.g., an electric compressor) that is operationally independent of the turbine engine 32.

The air circuit 176 may include a flow regulator 184 (e.g., a valve or valve system) to regulate a flow of the compressed air to the air turbine 174. By regulating the flow of the compressed air to the air turbine 174, the rotational speed of the aft open propulsor rotor 42 may also be regulated. In addition or alternatively, the air turbine 174 may be configured as a variable geometry air turbine to provide additional or alternative control over the rotational speed of the aft open propulsor rotor 42. Moreover, it is contemplated the flow regulator 184 may also or alternatively be configured as a switching valve. The flow regulator 184, for example, may be configured to (a) facilitate receiving the flow of the compressed air from one air source 180 in one mode and (b) facilitate receiving the flow of the compressed air from another air source 182 in another mode.

In some embodiments, during the dual rotor mode of FIG. 1, the rotational speed of the aft open propulsor rotor 42 may be less than the rotational speed of the forward open propulsor rotor 40. The rotational speed of the aft open propulsor rotor 42, for example, may be between thirty percent (30%) and fifty percent (50%) of the rotational speed of the forward open propulsor rotor 40 inclusive. In another example, the rotational speed of the aft open propulsor rotor 42 may be between ten percent (10%) and thirty percent (30%) of the rotational speed of the forward open propulsor rotor 40 inclusive. In still another example, the rotational speed of the aft open propulsor rotor 42 may be less than ten percent (10%) of the rotational speed of the forward open propulsor rotor 40.

In addition to boosting propulsion system thrust during the dual rotor mode, facilitating rotation of the aft open propulsor rotor 42 has various additional benefits. For example, when the aft open propulsor rotor 42 is rotating, the aft open propulsor rotor 42 may be more tolerant to foreign object collisions; e.g., bird strikes. In still another example, facilitating rotation of the aft open propulsor rotor 42 during ground maintenance may allow maintenance personnel to move a specific aft propulsor blade of interest at bottom dead center (BDC) or at top dead center (TDC) for ease of handling.

The engine sections 70-74 may be arranged sequentially along the propulsion system axis 24 and are housed within and/or formed by the housing structure 104. This housing structure 104 includes an engine case 186 (e.g., a gas generator case with one or more axial and/or circumferential sections) and a propulsion system nacelle 188. The engine case 186 houses one or more of the engine sections 71A-73B; e.g., the engine core 76. The engine case 186 of FIG. 1, for example, extends axially along (e.g., axially overlaps) and extends circumferentially about (e.g., circumscribes) the engine sections 71A-73B and the engine rotors 84-87. The engine case 186 may also house the geartrain 102. The propulsion system nacelle 188 houses and provides an aerodynamic cover over the engine case 186. The propulsion system nacelle 188 of FIG. 1, for example, is disposed radially outboard of, extends axially along (e.g., axially overlaps) and extends circumferentially about (e.g., circumscribes) the engine core 76 and its engine case 186. With the foregoing arrangement, the engine rotors 84-87 are disposed within the housing structure 104. By contrast, the forward propulsor blades 48 and the aft propulsor blades 60 are disposed (e.g., completely) outside of the housing structure 104.

The propulsion system nacelle 188 of FIG. 1 includes an inlet structure 190 and an aft nacelle structure 192. Referring to FIG. 2, the inlet structure 190 is disposed at an upstream, forward end 194 of the housing structure 104 next to and downstream of the forward open propulsor rotor 40 and its forward propulsor blades 48. Here, the housing structure forward end 194 is a leading edge of the inlet structure 190. The inlet structure 190 is configured as an annular airflow splitter (e.g., an annular inlet lip of the propulsion system nacelle 188) which splits the airflow propelled by the forward open propulsor rotor 40 into the outer stream and the inner stream. A radial inner portion 196 of the inlet structure 190 of FIG. 2, for example, forms an outer peripheral boundary of the flowpath inlet 80 into the aircraft propulsion system 20 at the housing structure forward end 194. A radial outer portion 198 of the inlet structure 190 forms an upstream, forward axial section of an exterior flow boundary 200 of the aircraft propulsion system 20, upstream and forward of the aft open propulsor rotor 42 and the rotor support structure 112. This outer portion 198 of the inlet structure 190 meets the inner portion 196 of the inlet structure 190 at the housing structure forward end 194.

Referring to FIG. 1, the aft nacelle structure 192 forms a downstream, aft axial section of the exterior flow boundary 200, downstream and aft of the aft open propulsor rotor 42 and the rotor support structure 112. This aft nacelle structure 192 may include one or more nacelle cowls disposed to opposing lateral sides of the aircraft propulsion system 20. Each of these nacelle cowls may be configured to pivot or otherwise move from a stowed position (for propulsion system operation) to an open position (for accessing engine accessories and/or the engine core 76 during turbine engine maintenance, inspection or the like). The aft nacelle structure 192 or, more generally, the housing structure 104 may also include an exhaust nozzle which forms an outer peripheral boundary of the flowpath exhaust 82.

Referring to FIG. 2, a downstream, aft end 202 of the inlet structure 190 is axially spaced apart from an upstream, forward end 204 of the aft nacelle structure 192 to form axial ends of an opening into a propulsor rotor receptacle 206 for the aft open propulsor rotor 42 and the rotor support structure 112 in the housing structure 104. This propulsor rotor receptacle 206 extends axially within the housing structure 104 between and to a region at the aft end 202 of the inlet structure 190 and a region at the forward end 204 of the aft nacelle structure 192. The propulsor rotor receptacle 206 projects radially into the housing structure 104 from the exterior flow boundary 200 partially towards or to the engine case 186. The propulsor rotor receptacle 206 extends within the housing structure 104 circumferentially about (e.g., completely around) the propulsion system axis 24 and the turbine engine 32. Here, the term "receptacle" is used to describe an open space (e.g., unoccupied volume) in the aircraft propulsion system 20 inboard of the exterior flow boundary 200. This open space may or may not be defined by walls within the aircraft propulsion system 20. For example, a radial inner side (e.g., a bottom side) of the propulsor rotor receptacle 206 may be formed by the engine case 186, one or more mounting structures attached to the engine case 186 and/or peripheral equipment mounted with the engine case 186. In another example, an axial side of the propulsor rotor receptacle 206 may be formed by various supports, frames, accessories and/or the like part of and/or housed radially beneath the nacelle members.

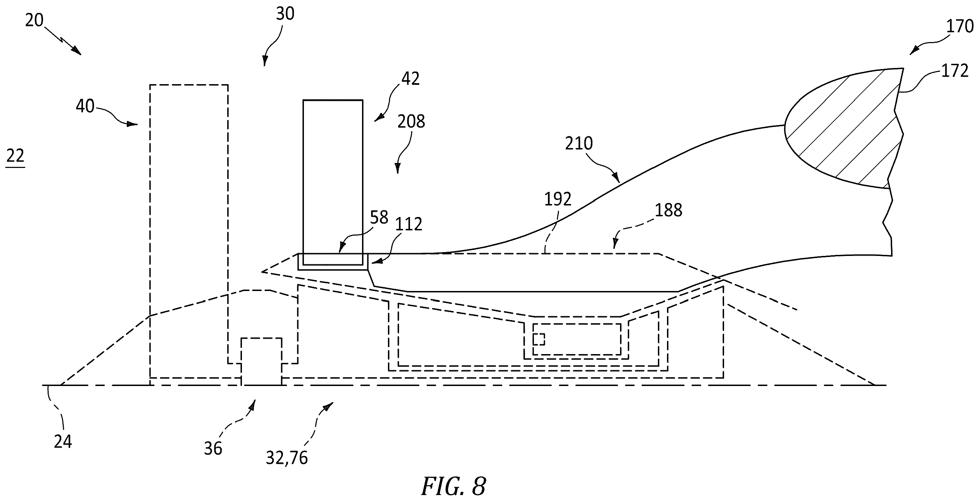

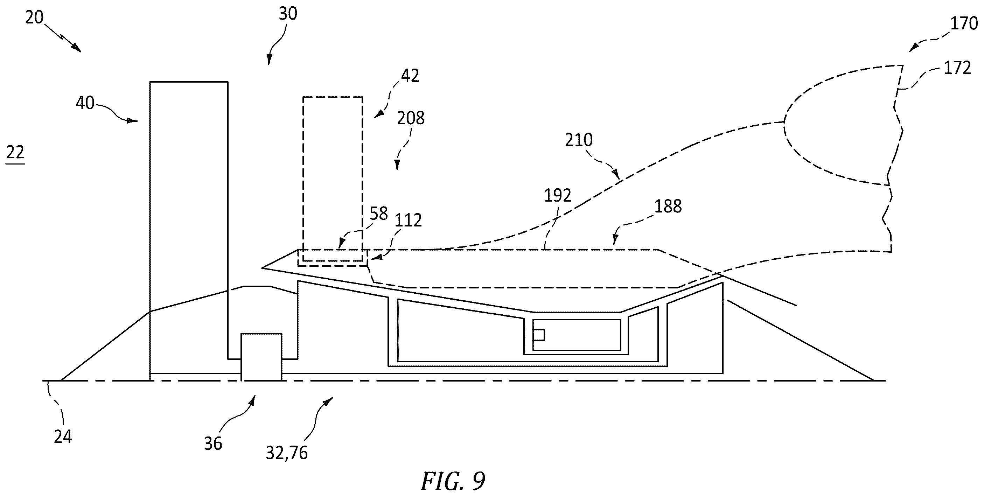

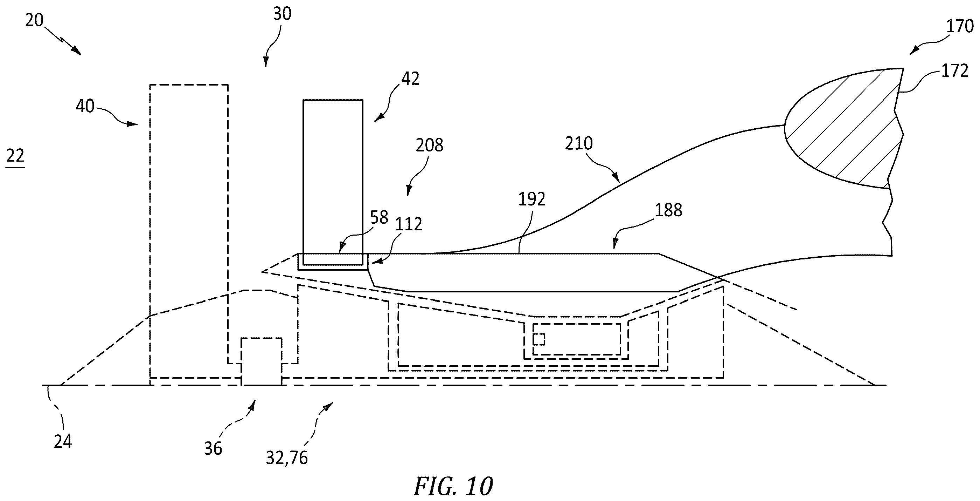

The housing structure 104 and its propulsor rotor receptacle 206 are configured to mate with and receive the aft open propulsor rotor 42 and the rotor support structure 112. More particularly, the aft rotor base 58 of FIG. 2 is disposed within the propulsor rotor receptacle 206 such that the outer side of the aft rotor base 58 may be flush with radial outer sides of the nacelle members 190 and 192 to collectively form the exterior flow boundary 200. Here, the exterior flow boundary 200 of FIG. 2 is collectively formed by the propulsion system members (e.g., 58, 190 and 192) with substantially few or no interruptions, except for seams between the propulsion system members 190 and 58, 58 and 192. With this arrangement, at least (or only) the aft open propulsor rotor 42 and the rotor support structure 112 of FIG. 1 may be configured together as a standalone aft propulsor module 208 which may be removed from or installed with the rest of the aircraft propulsion system 20 (e.g., propulsion system members 32, 40, 188) as a single unit. Alternatively, referring to FIG. 8, the rest of the aircraft propulsion system 20 (e.g., propulsion system members 32, 40, 188) may be configured to be removed from or installed with the aft open propulsor rotor 42, the rotor support structure 112 and/or a pylon structure 210 for the aircraft propulsion system 20 while (a) the rotor support structure 112 remains (e.g., completely) mounted to, integrated with or otherwise connected to the pylon structure 210 and (b) the aft open propulsor rotor 42 remains rotationally coupled to the rotor support structure 112. Briefly, the pylon structure 210 is configured to mount the aircraft propulsion system 20 to a component of the aircraft airframe 170 such as, but not limited to, the aircraft wing 172 or the aircraft fuselage. In other embodiments, referring to FIGS. 9 and 10, it is contemplated the aft nacelle structure 192 may be configured as part of the aft propulsor module 208 or as another separate module which may (or may not) remain (e.g., completely) mounted to, integrated with or otherwise connected to the pylon structure 210. Although the pylon structure 210 is depicted in the drawings as being located at and coupled to a top of the aircraft propulsion system 20 (e.g., top dead center as in an under wing mounted system), it is contemplated the pylon structure 210 may alternatively be coupled to a side or a bottom portion of the aircraft propulsion system 20; e.g., overwing mount, empennage mount, etc.

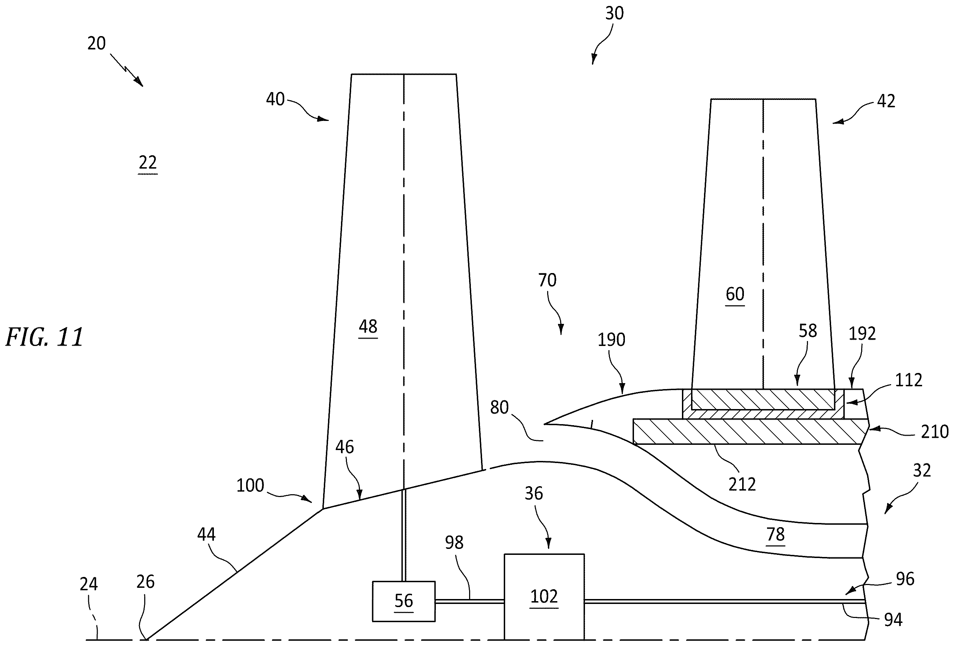

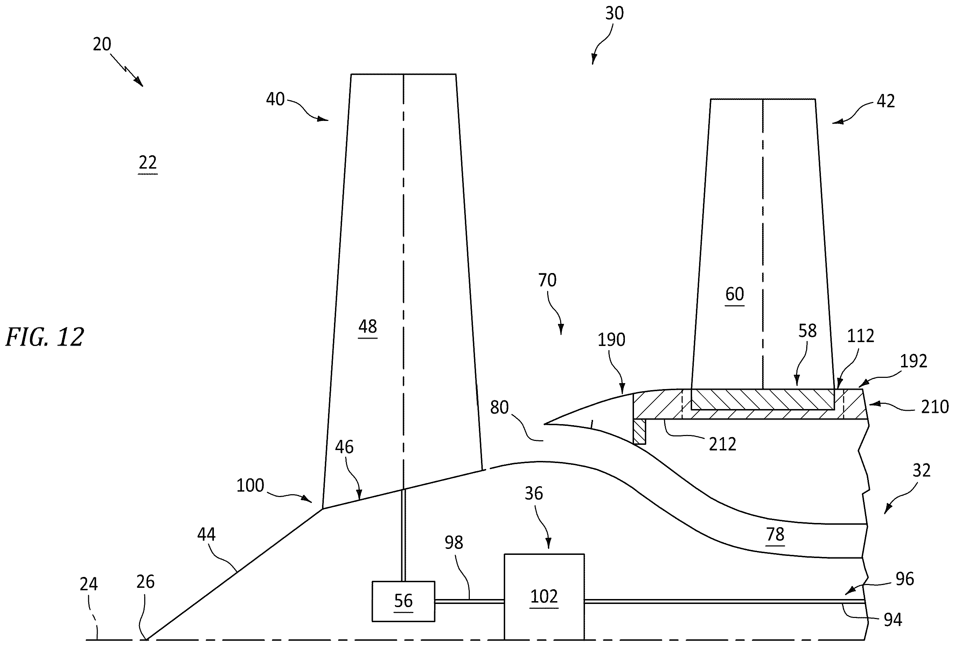

In some embodiments, referring to FIG. 11, the rotor support structure 112 may be mounted to the pylon structure 210. The rotor support structure 112 of FIG. 11, for example, may be mechanically fastened to the pylon structure 210 with one or more fasteners. Here, the rotor support structure 112 is disposed radially outboard of and axially overlaps an end portion 212 (e.g., a cantilevered beam, a truss, etc.) of the pylon structure 210. In other embodiments, referring to FIG. 12, the rotor support structure 112 may be integrated with the pylon structure 210. The rotor support structure 112 of FIG. 12, for example, may be formed integral with (e.g., part of) the end portion 212 of the pylon structure 210.

In some embodiments, referring to FIGS. 11 and 12, the rotor support structure 112 may be connected to the pylon structure 210 independent of (e.g., separate from, not through, not structurally dependent on, etc.) the turbine engine 32 and its engine case 186. The rotor support structure 112 of FIGS. 11 and 12, for example, is (e.g., directly) mounted to, formed integral with and/or otherwise connected to the pylon structure 210. The rotor support structure 112 is thereby structurally tied to the pylon structure 210 independent of the turbine engine 32 and its engine case 186 as well as, for example, independent of (e.g., any) mounting structure(s) which structurally tie the turbine engine 32 and its engine case 186 to the pylon structure 210. With this arrangement, a weight of an assembly of the aft open propulsor rotor 42 and the rotor support structure 112 is supported (e.g., directly) by the pylon structure 210 and not the turbine engine 32 and its engine case 186. Thus, an overhung weight of the rest of the aircraft propulsion system 20 (e.g., propulsion system members 36 and 40) may be reduced.

In some embodiments, referring to FIG. 11, one or more of the propulsion system members 32, 36 and 40 may be mounted to the pylon structure 210 independent of the aft propulsor assembly and its rotor support structure 112. The propulsion system members 32, 36 and 40 of FIG. 11, for example, are collectively (e.g., directly or indirectly) mounted to the pylon structure 210 via load paths independent of the rotor support structure 112 / the propulsor rotor receptacle 206. The propulsion system members 32, 36 and 40 are thereby collectively structurally tied to the pylon structure 210 independent of the aft propulsor assembly and its rotor support structure 112. In other embodiments, referring to FIG. 12, one or more of the propulsion system members 32, 36 and 40 may be mounted to the pylon structure 210 through the rotor support structure 112. The propulsion system members 32, 36 and 40 of FIG. 12, for example, are collectively (e.g., directly or indirectly) mounted to the end portion 212 of the pylon structure 210 and, thus, the rotor support structure 112 which is formed integral with the end portion 212 of the pylon structure 210. With both arrangements of FIGS. 11 and 12, the overhung weight of the aircraft propulsion system 20 may be reduced as the end portion 212 of the pylon structure 210 may project axially along or axially forward of the aft propulsor assembly and its rotor support structure 112.

For ease of description, referring to FIG. 1, the aft propulsor assembly is described above as including the aft open propulsor rotor 42 and the rotor support structure 112. It is contemplated, however, the aft propulsor assembly may (or may not) also include the rotor drive system 34 and/or the aft rotor drivetrain 38. One or more of the members 34 and/or 38 therefore may also be included in the aft propulsor module 208 with the aft open propulsor rotor 42, the rotor support structure 112 and optionally the pylon structure 210.

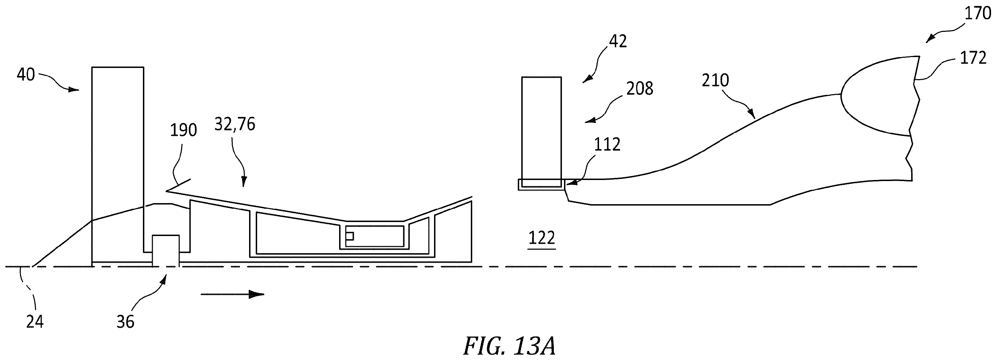

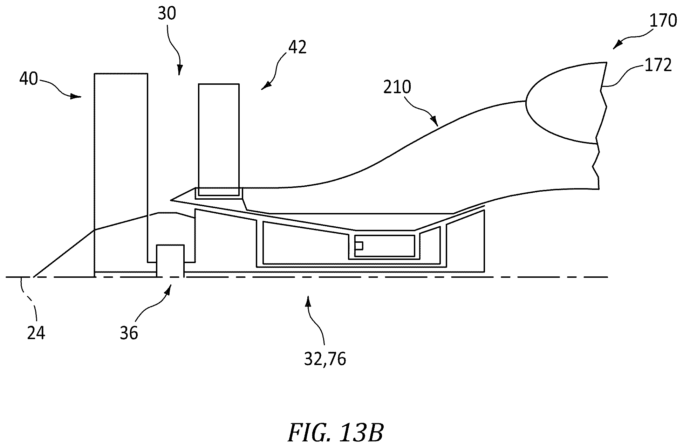

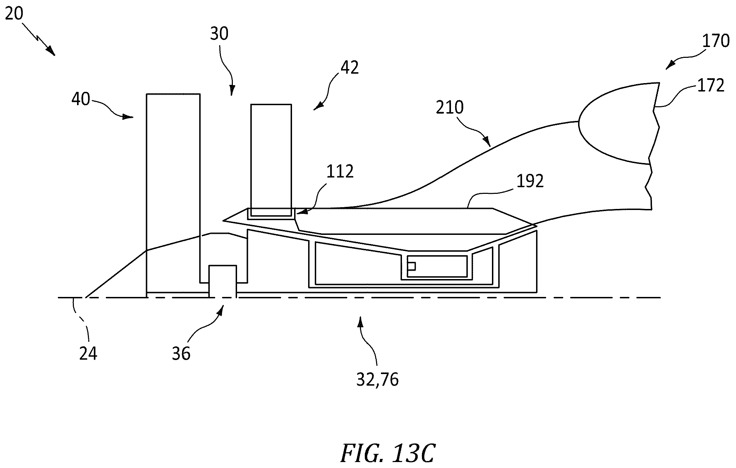

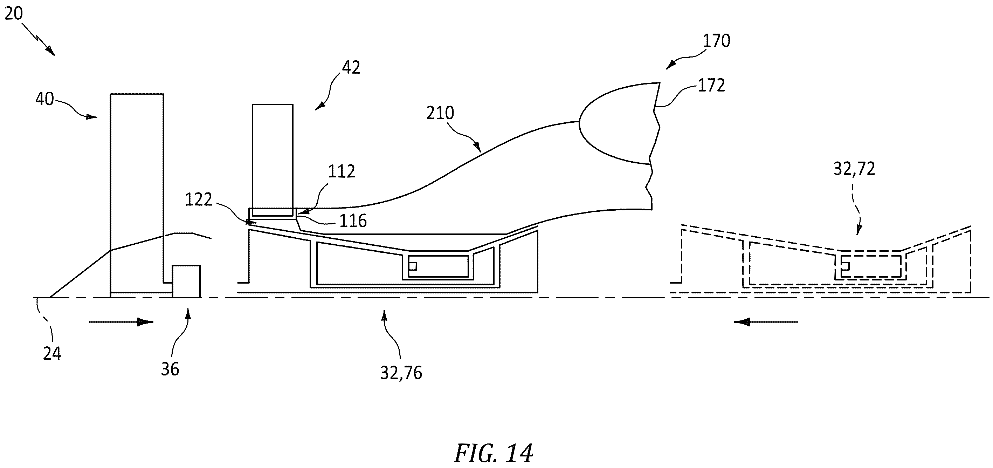

FIGS. 13A-C illustrate a sequence for assembling the aircraft propulsion system 20 with the aircraft airframe 170. Referring to FIG. 13A, the aft propulsor module 208 may be mounted to the airframe component; e.g., the aircraft wing 172. Referring to FIG. 13B, the turbine engine 32 may be translated in an axial aft direction and inserted into and passed through the support structure bore 122 of the rotor support structure 112. The turbine engine 32 may subsequently be attached to the pylon structure 210 by one or more mounting structures. During this step, the forward open propulsor rotor 40 may be coupled to the turbine engine 32 and axially translated with the turbine engine 32. Alternatively, the forward open propulsor rotor 40 may be coupled to the turbine engine 32 following the mounting of the turbine engine 32 to the pylon structure 210. Referring to FIG. 13C, the aft nacelle structure 192 is mounted with the turbine engine 32 and/or the pylon structure 210. The present invention, however, is not limited to such an exemplary assembly technique. For example, referring to FIG. 14, the turbine engine 32 may alternatively be translated in an axial forward direction and inserted into the support structure bore 122 of the rotor support structure 112 from the support structure aft end 116 for attachment to the pylon structure 210. The forward open propulsor rotor 40 may subsequently be translated in the axial aft direction for coupling to the turbine engine 32.

In some embodiments, referring to FIG. 3, the rotor support structure 112 may be configured as a single unit. In other embodiments, it is contemplated the rotor support structure 112 may be configured from a set of arcuate segments attached circumferentially end-to-end to form the annular rotor support structure 112; e.g., see exemplary optional section lines 213A and 213B. With such an arrangement (e.g., the section lines 213A), it is contemplated the support structure segments to the opposing sides of the pylon structure 210 may open like a clam shell to facilitate turbine engine installation, inspection and/or removal.

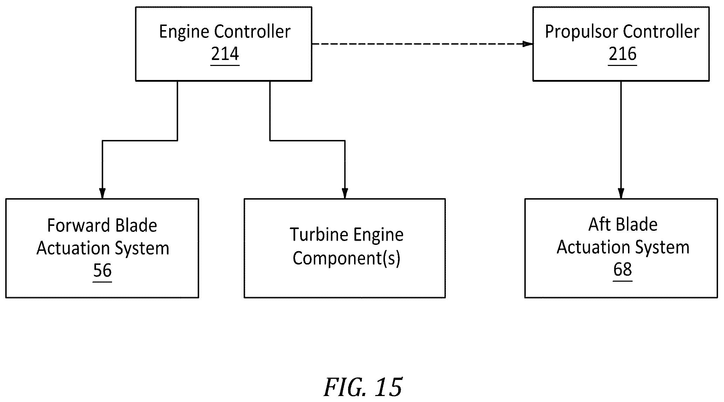

In some embodiments, referring to FIG. 15, the aircraft propulsion system 20 may be configured with multiple discrete controllers such as an onboard engine controller 214 and an aft propulsor controller 216. Examples of the engine controller 214 include, but are not limited to, an electronic engine controller (EEC), an electronic control unit (ECU), a full-authority digital engine controller (FADEC), etc. This engine controller 214 is configured to control and/or monitor operation of various turbine engine component(s) as well as various other propulsion system members including the forward blade actuation system 56. By contrast, the aft propulsor controller 216 is configured to control operation of the aft blade actuation system 68. While this aft propulsor controller 216 is physically discrete from the engine controller 214 and may (or may not) be located remote from the engine controller 214, the aft propulsor controller 216 may be in signal communication with (e.g., hardwired and/or wirelessly coupled to) the engine controller 214 to coordinate operation of the various propulsion system members (e.g., 56 and 68 of FIG. 2). Of course, in other embodiments, it is contemplated the single engine controller 214 may also (e.g., directly) control operation of the aft blade actuation system 68.

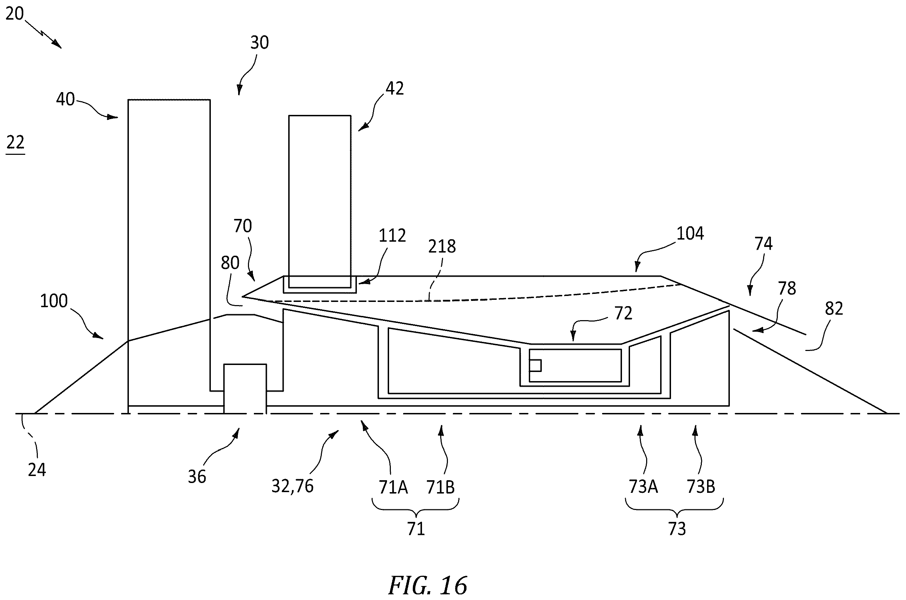

In some embodiments, referring to FIG. 1, the aircraft propulsion system 20 may include a single (e.g., major) internal flowpath; e.g., the engine flowpath 78. In other embodiments, referring to FIG. 16, the aircraft propulsion system 20 may alternatively include multiple (e.g., major) internal flowpaths. The engine flowpath 78 of FIG. 16, for example, is configured as a core flowpath of the turbine engine 32, and the turbine engine 32 also includes a (e.g., annular or non-annular) bypass flowpath 218. Here, the bypass flowpath 218 may split off or otherwise bleed gas from the engine flowpath 78 at an intersection location. This intersection location is downstream of the flowpath inlet 80 and upstream of any one or more of the engine section(s) 71A-74. The intersection location of FIG. 16, for example, is disposed longitudinally along the engine flowpath 78 upstream of (or along) the compressor section 71. From this intersection location, the bypass flowpath 218 then extends around the engine section(s) (e.g., 71A-74) to bypass those engine sections(s) (e.g., 71A-74).

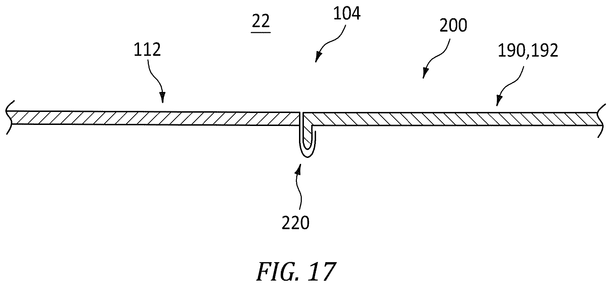

In some embodiments, referring to FIG. 17, one or more propulsion system members (e.g., 190 and 192) may meet the rotor support structure 112 at a joint 220 therebetween. This joint 220 may include a V-groove coupling or another type of coupling to facilitate substantially synchronous movement (e.g., shifting) between the propulsion system members 112 and 190, 112 and 192 during aircraft flight and to minimize the steps and gaps along the exterior flow boundary 200. Here, the rotor support structure 112 may be substantially structurally independent of the other member 190, 192. However, the V-groove coupling may facilitate positioning between the rotor support structure 112 and the other member 190, 192.

The engine flowpath 78 of FIG. 1 extends longitudinally from the flowpath inlet 80, sequentially through the inlet section 70, the LPC section 71A, the HPC section 71B, the combustor section 72, the HPT section 73A, the LPT section 73B and the exhaust section 74, to the flowpath exhaust 82. The engine flowpath 78 of FIG. 1 is configured such that the core air and the combustion products generally flow in the aft, downstream direction towards the propulsion system aft end 28. The core air and the combustion products thereby flow along with the ambient air propelled by the rotating propulsor rotor(s) 40 and/or 42 in a common axial direction - the downstream, aft direction. The turbine engine 32 of the present invention, however, is not limited to such an exemplary common flow engine arrangement. For example, the engine flowpath 78 may alternatively be configured such that the core air and the combustion products generally flow in a forward, upstream direction towards the propulsion system forward end 26. The core air and the combustion products may thereby flow in an opposite direction as the ambient air propelled by the rotating propulsor rotor(s) 40 and/or 42. Here, the turbine engine 32 may have a reverse flow engine arrangement.

The propulsion section 30 of FIG. 1 is described above with a tractor configuration; e.g., where the forward open propulsor rotor 40 is disposed at or otherwise near the propulsion system forward end 26. It is contemplated, however, the propulsion section 30 may alternatively be disposed at or otherwise near the propulsion system aft end 28 to provide a pusher fan configuration. Moreover, while the turbine engine 32 is described above with a particular two rotating structure arrangement, the present invention is not limited thereto. For example, the LPC rotor 84 may be omitted to configure the LPT rotor 87 as a power turbine (PT) rotor for the propulsor rotor. In another example, the turbine engine 32 may also include another rotating structure; e.g., an intermediate speed spool for the engine core 76.

While various embodiments of the present invention have been described, it will be apparent to those of ordinary skill in the art that many more embodiments and implementations are possible within the scope of the invention. For example, the present disclosure as described herein includes several aspects and embodiments that include particular features. Although these features may be described individually, it is within the scope of the present disclosure that some or all of these features may be combined with any one of the aspects and remain within the scope of the invention. Accordingly, the present invention is not to be restricted except in light of the attached claims and their equivalents.

## Claims

1. An assembly for an aircraft propulsion system (20), the assembly comprising:
a first open propulsor rotor (40);
a turbine engine (32) including a flowpath, a compressor section (71), a combustor section (72), a turbine section (73) and a rotating structure (94), the flowpath extending longitudinally though the compressor section (71), the combustor section (72) and the turbine section (73) from an airflow inlet (80) into the flowpath to a combustion products exhaust (82) from the flowpath, the rotating structure (94) comprising a turbine rotor (84) in the turbine section (73), and the rotating structure (94) configured to drive rotation of the first open propulsor rotor (40);
a pylon structure (210) mounted to the turbine engine (32);
a support structure (112) arranged with the pylon structure (210) independent of the turbine engine (32);
a second open propulsor rotor (42) rotationally supported by the support structure (112); and
a drive system (140) configured to drive rotation of the second open propulsor rotor (42).

2. The assembly of claim 1, wherein:
the rotating structure (94) is configured to drive the rotation of the first open propulsor rotor (40) during a first mode and a second mode;
the drive system (140) is configured to drive the rotation of the second open propulsor rotor (42) during the first mode; and
the second open propulsor rotor (42) is rotationally fixed during the second mode.

3. The assembly of claim 1 or 2, wherein:
the support structure (112) is mounted to the pylon structure (210) independent of the turbine engine (32); or
the support structure (112) is formed integral with the pylon structure (210).

4. The assembly of any preceding claim, wherein the drive system (140) is discrete from the rotating structure (94).

5. The assembly of any preceding claim, wherein:
the drive system comprises a drive unit (140) operably coupled to and configured to drive the rotation of the second open propulsor rotor (42); and
the drive unit (140) is mounted to at least one of the support structure (112) or the pylon structure (210).

6. The assembly of any preceding claim, wherein:
the drive system (140) comprises an electric machine (150) operably coupled to and configured to drive the rotation of the second open propulsor rotor (42); and/or
the assembly further comprises a power source (158) operatively independent of the turbine engine (32), the power source (158) configured to power operation of the drive system (140); and/or
the turbine engine (32) is configured to power operation of the drive system (140).

7. The assembly of any of claims 1-5, wherein the drive system comprises an air turbine (174) operably coupled to and configured to drive the rotation of the second open propulsor rotor (84, 85, 86, 87).

8. The assembly of any preceding claim, further comprising:
a housing structure (104) including an engine case (186), a nacelle structure (188) and a receptacle (122), wherein:
the nacelle structure (188) is disposed radially outboard of and extending along the engine case (186), and the nacelle structure (188) forms a first axial section of an exterior flow boundary (200) for the aircraft propulsion system (20) that borders an environment (22) external to the aircraft propulsion system (20);
the receptacle (122) is disposed radially outboard of the engine case (186) and axially between the first open propulsor rotor (40) and the nacelle structure (188), and the receptacle (122) is configured to receive the support structure (112); and
the compressor section (71), the combustor section (72) and the turbine section (73) are housed within the engine case (186).

9. The assembly of any preceding claim, wherein at least the pylon structure (210), the support structure and the second open propulsor rotor (42) are configured together in a standalone module that is independent of the turbine engine (32).

10. An assembly for an aircraft with an airframe and a propulsion system (20), the assembly comprising:
a pylon structure (210) configured to mount the propulsion system (20) to a member (190) of the airframe;
a support structure (112) mounted to or formed integral with the pylon structure (210), the support structure (112) comprising a track (124) and a bore (122), the track (124) extending circumferentially about an axis (24), the bore (122) extending axially through the support structure (112) and configured as a receptacle for a turbine engine (32) of the propulsion system (20); and
an open propulsor rotor (42) disposed radially outboard of and circumscribing the support structure (112), the open propulsor rotor (42) comprising a rotor base (58) and a plurality of open propulsor blades (60), the rotor base (58) configured with the track (124) such that the open propulsor rotor (42) is operable to move relative to the support structure (112) and rotate about the axis (24), the plurality of open propulsor blades (60) arranged circumferentially about the axis (24) in an array, and each of the plurality of open propulsor blades projecting radially out from the rotor base (58) into an external environment (22).

11. The assembly of claim 10, further comprising a drive unit (140) configured to drive rotation of the open propulsor rotor (42) about the axis (24), wherein:
the drive unit (140) connected to the support structure and operatively coupled to the rotor base (58); and/or
the drive unit (140) is configured to drive rotation of the open propulsor rotor (42) about the axis (24) during a first mode and a lock (162) is configured to rotationally fix the open propulsor rotor (42) to the support structure (112) during a second mode.

12. The assembly of claim 10 or 11, wherein:
the track (124) comprises an annular channel (126) in the support structure (112) and the rotor base (58) is seated within the annular channel (126); and/or
the assembly further comprises at least one of:
a first bearing (134) radially between and engaged with the rotor base (58) and the support structure (112); or
a second bearing (136, 138) axially between and engaged with the rotor base (58) and the support structure (112).

13. The assembly of claim 10, 11 or 12, further comprising an actuation system configured to adjust a pitch of one or more of the plurality of open propulsor blades (60).

14. An assembly for an aircraft propulsion system (20), the assembly comprising:
a support structure (112) comprising a channel (126) and a bore (122), the channel (126) extending circumferentially around an axis (24) within the support structure (112), the channel (126) projecting radially inward into the support structure (112) towards the axis (24) to a channel endwall (128), the channel (126) extending axially along the axis (24) within the support structure between a first channel sidewall (130) and a second channel sidewall (132), and the bore (122) extending axially along the axis (24) through the support structure (112) and configured to receive a turbine engine (32) for the aircraft propulsion system (20);
an open propulsor rotor (42) comprising a rotor base (58) and a plurality of open propulsor blades (60), the rotor base (58) disposed in the channel (126) and circumscribing the support structure (112), the plurality of open propulsor blades (60) arranged circumferentially about the axis (24) in an array, and each of the plurality of open propulsor blades (60) projecting radially out from the rotor base (58) into an external environment (22) to a respective blade tip (64); and
one or more bearings (134, 136, 138) moveably coupling the rotor base (58) to the support structure (112) such that the open propulsor rotor (42) is configured to move relative to the support structure (112) and rotate around the axis (24).

15. The assembly of claim 14, further comprising a pylon structure (210) configured to mount the turbine engine (32) to an aircraft airframe (170), wherein the support structure is fixed (112) to the pylon structure (210).
